# EUROPEAN PATENT SPECIFICATION

(11) **EP 3 212 435 B1**
(45) Date of publication and mention of the grant of the patent: **22.08.2018**
(21) Application number: 14812610.5
(22) Date of filing: 30.10.2014
(51) Int. Cl.: B60B 11/02, B60B 11/06

(54) **FASTENING SYSTEM**
BEFESTIGUNGSSYSTEM
SYSTÈME DE CONNEXION

(43) Date of publication of application: 06.09.2017
(73) Proprietor: Titan Italia S.p.A., 40056 Valsamoggia (BO) (IT)
(72) Inventor: CAVEDONI, Marco, I-41058 Vignola (Modena) (IT)
(74) Representative: Pandolfi, Paolo
(86) International application number: PCT/IB2014/065723
(87) International publication number: WO 2016/067079

(56) References cited:
- EP-A1- 0 854 791
- EP-A1- 1 424 216
- AU-A- 1 465 883
- US-A- 3 713 701

## Description

The present invention relates to a fastening system for detachably fastening an auxiliary wheel to a vehicle wheel, in particular an agricultural vehicle.

In agriculture, a need is felt of minimizing the pressure exerted by the wheels on the soil while ensuring as greatest traction to the agricultural vehicle as possible.

In fact, minimizing the pressure exerted on the soil allows on the one hand to compact the ground to a lesser extent, thereby avoiding to crush and/or prevent the growth of the root system of the plants, such as to obtain larger crops and, on the other hand to reduce fuel consumption such as to save money.

This need is known to be met by increasing the area of contact of the vehicle on the soil, i.e. by fastening an auxiliary wheel to each one of the vehicle wheels.

Wheels of agricultural vehicles are known, which consist of a rim on which a tire is mounted and a disc.

In the case of fixed wheels, the disc is fixedly fastened to the rim, e.g. by means of welding, whereas in the case of adjustable wheels the disc is detachably fastened to brackets welded to the rim, for example by means of a threaded connection.

The wheels can be then fixed to the vehicle hub by means of a threaded connection.

Auxiliary wheels are also known, which consist of a rim on which an auxiliary tire is mounted and an annular spacer, which is welded to and laterally projects from the rim.

The auxiliary wheels are known to be detachably fastened to the vehicle wheels by means of a fastening system of the type described in EP0854791.

The fastening system described in EP0854791 includes a plurality of tensioning devices. Each tensioning device comprises an anchoring element, a tension rod, or connection rod and a tensioning element.

The anchoring elements, which are normally six in number, are fastened in an angularly equidistant manner at a peripheral circular portion, i.e. a portion which is closer to an inner surface of the rim, of the wheel disc.

Each anchoring element is provided with a radial recess.

Each of said tension rods comprises a head, or tang, which can be radially and detachably fitted into a radial recess of a respective anchoring element.

Again, each tension rod comprises a threaded end portion opposite the respective head.

Each of said tensioning elements comprises a hook element, which can be detachably hooked to an inner fastening ring included in the spacer, a lever element, which is pivotally connected through a pin to the respective hook element and an internally threaded bush, which is pivotally connected through a further pin to a respective lever element.

Again, each of said tensioning elements comprises a drive element which can be engaged by a suitably shaped wrench.

In use, in order to adjust the tensioning of each tensioning device, it is sufficient to screw/unscrew the threaded portion of a tension rod to/from the respective bush, thereby changing the distance between the respective anchoring element and the respective tensioning element.

Again in use, in order to drive each tensioning device between a respective blocking position, wherein the tensioning device is tensioned to fasten the auxiliary wheel to the wheel, and a release position, wherein the tensioning device is not tensioned to remove the auxiliary wheel from the wheel, it is sufficient to insert the wrench into the respective drive element and to rotate the corresponding lever element.

In particular, each tensioning device is positioned in the respective blocking position by rotating the respective lever element clockwise and vice versa, each tensioning device is positioned in the respective release position by rotating the respective lever element counter-clockwise.

A drawback of the fastening system as described in EP0854791 is that it is configured such that all the forces generated from the auxiliary wheel are discharged onto the rim and disc of the vehicle wheel thereby inevitably causing the rim and disc to break down over time.

In fact, the forces generated from the auxiliary wheel are discharged, by means of the tensioning devices, directly onto the disc of the (main) vehicle wheel and by means of the spacer welded to the rim of the auxiliary wheel (by means of the contact between the spacer and the shoulder of the vehicle wheel rim), to the vehicle wheel rim.

US3713701A discloses a detachable auxiliary tractor tire and a wheel attachment system. In particular, US3713701A describes a wheel attachment system for detachably securing auxiliary tire and rim assemblies to the rear wheels of tractors utilizing modified wheel nuts for the main wheel attachment which enables bolts to be hooked to these nuts and extend to clips which engage over the outer rim of the auxiliary wheel thus clamping one to the other without the necessity of welding lugs, beads or other forms of attachment to the auxiliary wheel rim.

AU1465883A discloses a second wheel attachment system for the attachment of a second wheel in a side-by-side relationship with the original equipment wheel of a tractor secured to a hub thereof by studs. The wheel attachment system comprises a clamp plate projecting inwardly from the rim of the second wheel, a spacer on the clamp plate which projects in an axial direction and abuts the rim of the original equipment wheel, a plurality of nuts on the respective studs of the original equipment wheel, a plurality of clamping bolts engaging the respective nuts and projecting through apertures in the clamp plate, and tightening elements on each respective clamping bolt bearing against the clamp plate and urging the spacer into firm engagement with the original equipment wheel.

An object of the invention is to improve the fastening systems for detachably fastening an auxiliary wheel to a vehicle wheel, in particular an agricultural vehicle.

A further object is to provide a fastening system which allows protecting the vehicle wheels to which the auxiliary wheels are fastened.

These and other objects are achieved by means of a fastening system according to one or more of the claims stated below.

The invention will be better understood and carried out with reference to the attached drawings illustrating an exemplary and non-limiting embodiment thereof, in which:
Figure 1 is a front view of a fastening system according to the invention;
Figure 2 is a section taken along the plane II-II of Figure 1 of the assembly of Figure 1;
Figure 3 is a view similar to Figure 2, which shows the assembly of Figure 1 mounted on a vehicle hub;
Figure 4 is a cross-section of a vehicle wheel;
Figure 5 is a view similar to Figure 4 of a fastening element included in the fastening system according to the invention;
Figure 6 is an axonometric view of a tensioning device included in the fastening system according to the invention;
Figure 7 is a view similar to Figure 4 of an auxiliary wheel of a vehicle provided with an annular spacer included in the fastening system according to the invention.

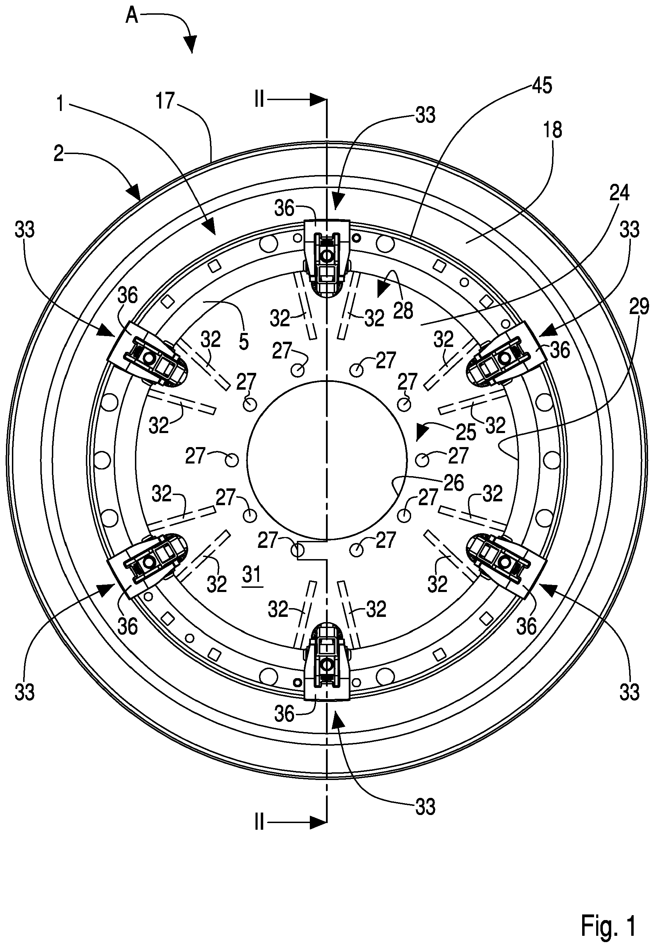

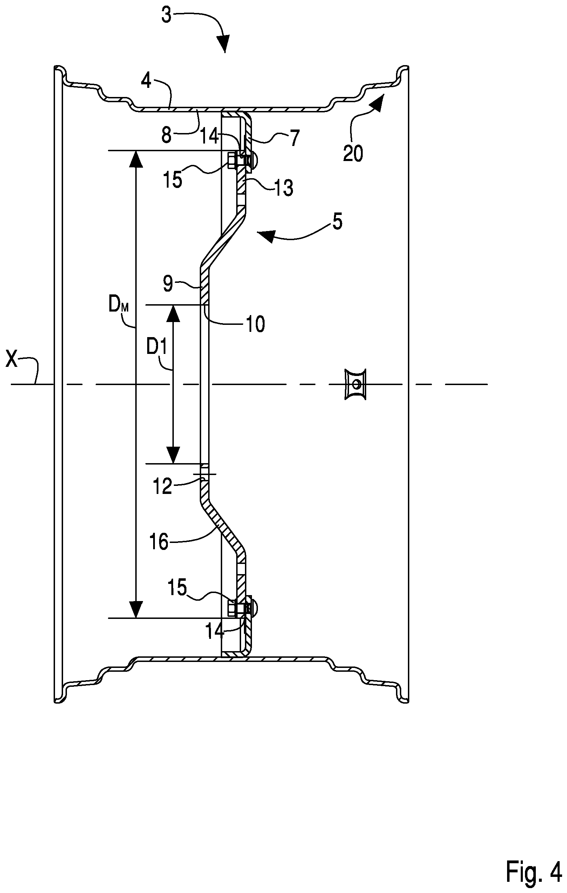

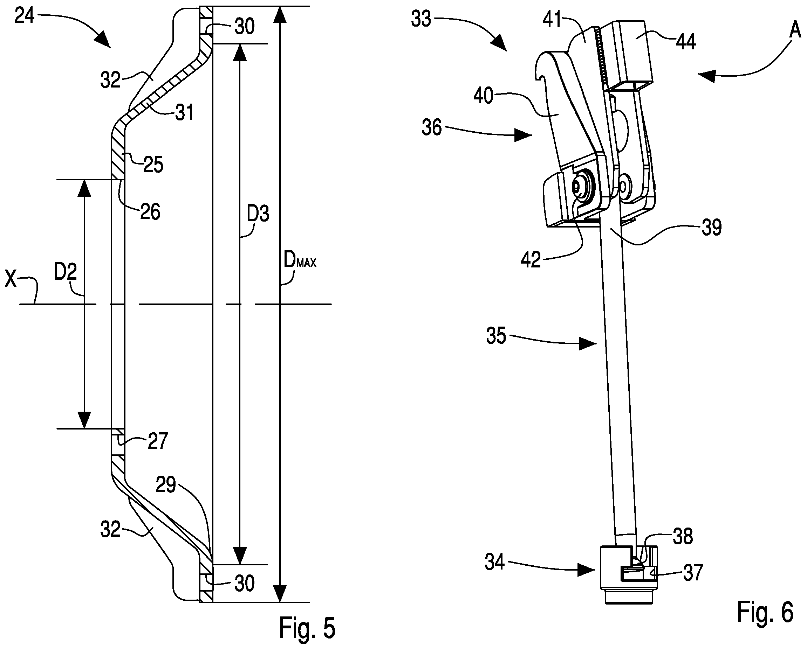

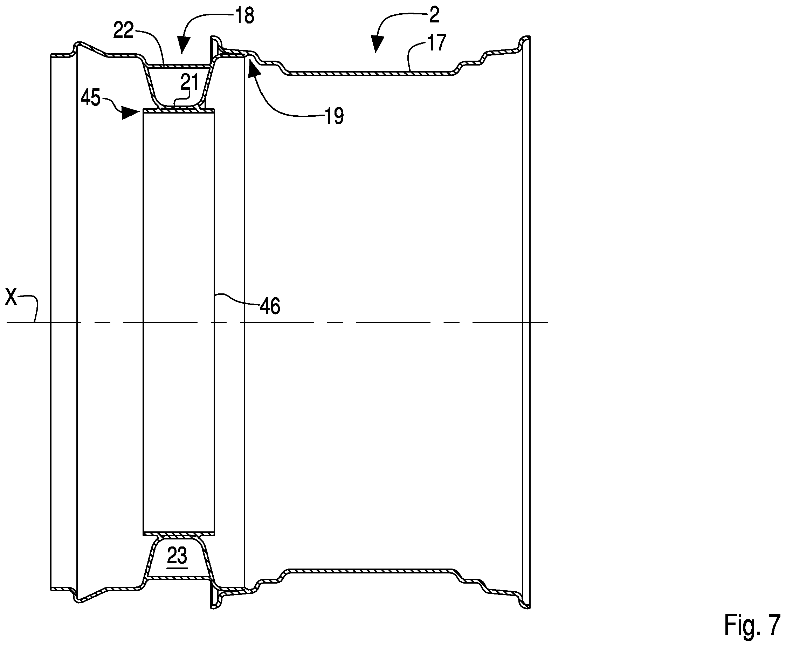

With reference to Figures 1 to 7 a fastening system 1 according to the invention is shown for fastening an auxiliary wheel 2 to a main wheel 3 of a vehicle, not shown, in particular an agricultural vehicle.

The main wheel 3 comprises a rim 4, on which a tire can be mounted, not shown, and a disc 5 through which the main wheel 3 can be mounted on a hub 6.

The rim 4 comprises a connection member 7 projecting from an inner circumferential surface 8, or well, of the rim 4 to a rotation axis X of the main wheel 3.

The connection member 7, or circular bracket, comprises a circumferentially continuous individual annular element which is fastened, for example by welding, to the inner circumferential surface 8.

In an alternative version, not shown, instead of a circumferentially continuous individual annular element, the connection member 7 comprises a plurality of circumferentially equally spaced lobes, or projections.

The disc 5 comprises a planar central region 9 which is provided with a central opening 10 arranged for receiving a portion 11 of the hub 6.

In particular, the central opening 10 is circularly shaped and has a diameter D1.

In the planar central region 9 a plurality of fastening holes 12 is provided, which are angularly equally spaced from one another and arranged around the central opening 10, in order to mount the disc 5 and thus the main wheel 3 on the hub 6 by means of removable connecting means, not shown, for example bolts.

The disc 5 further comprises an annular-shaped and substantially planar flange region 13, which is arranged to face the connection member 7.

In the flange region 13, a plurality of further fastening holes 14 is provided, which are angularly equally spaced from one another, in order to mount the disc 5 on the connection member 7, by means of removable connecting means 15, for example bolts.

Again, the disc 5 includes a shaped region 16, for example cone-shaped, in order to connect the planar central region 9 to the flange region 13.

The auxiliary wheel 2 comprises a further rim 17, which has the same diameter as the rim 4 on which a further tire, not shown, can be mounted.

The fastening system 1 according to the invention comprises an annular spacer 18 which is interposed, in use, between the rim 4 and the further rim 17.

In particular, the annular spacer 18 is fixed, for example by means of a circumferential welding, to a shoulder 19 of the further rim 17 and can be detachably coupled to a further shoulder 20 of the rim 4.

Again, the annular spacer 18 comprises a circumferential recess 21 projecting to the rotation axis X of the main wheel 3.

Furthermore, the annular spacer 18 includes a strengthening ring 22 to reinforce the annular spacer 18.

The strengthening ring 22, which is cylindrically shaped, faces the circumferential recess 21 and co-operates with the latter to define a channel 23.

The fastening system 1 further comprises a fastening element, or auxiliary disc 24.

The fastening element 24 comprises a first fastening portion 25, or first flange which defines a first central opening 26 arranged for receiving the portion 11 of the hub 6.

In particular, the first central opening 26 has a circular shape and has a diameter D2 which is substantially equal to the diameter D1 of the central opening 10 of the disc 5.

Said first fastening portion 25 has the shape of a planar circular crown and extends in a first plane, not shown, which is substantially perpendicular to the rotation axis X of the main wheel 3.

The first fastening portion 25 comprises a plurality of first fastening holes 27, which are equally spaced from one another and arranged around the first central opening 26, in order to fix the fastening element 24 to the hub 6 by means of removable connecting means, not shown, for example bolts.

In use, the first fastening holes 27 are coaxial with the fastening holes 12 of the disc 5, such that the first fastening holes 27 and the respective facing fastening holes 12 can be engaged by removable connecting means which is in common between them, not shown, such as bolts, in order to fasten the fastening element 24 to the hub 6 through the main disc 5.

In an alternative version, not shown, the fastening element 24 is provided to be directly fixed to the hub 6 without the disc 5 being interposed between the hub 6 and the fastening element 24.

The fastening element 24 further comprises a second fastening portion 28, or second flange, which is axially spaced, with respect to the rotation axis X, from the first fastening portion 25.

The second fastening portion 28 defines a first central opening 29, circularly shaped, having a diameter D3 greater than the diameter D2 of the first central opening 26 of the first fastening portion 25.

In particular, the first central opening 26 and second central opening 29 are coaxial.

Also the abovementioned second fastening portion 28 is shaped as a planar circular crown and extends in a second plane, not shown, which is substantially perpendicular to the rotation axis X of the main wheel 3.

In particular, the second fastening portion 28 has a maximum diameter D_{MAX} smaller than a maximum diameter D_{M} of the disc 5.

In an alternative version, not shown, the second fastening portion 28 has a conical shape with a concavity, in use, facing the auxiliary wheel 2.

Again, the second fastening portion 28 comprises a plurality of second fastening holes 30, which are angularly equally spaced form one another and arranged about the second central opening 29, the function of which will be described below.

The fastening element 24 further comprises a shaped portion 31, in order to connect the first fastening portion 25 to the second fastening portion 28.

The shaped portion comprises a conical portion 31 having a diameter which increases from the first fastening portion 25 to the second fastening portion 28.

In other words, in use, the conical portion 31 has a concavity facing the auxiliary wheel 2.

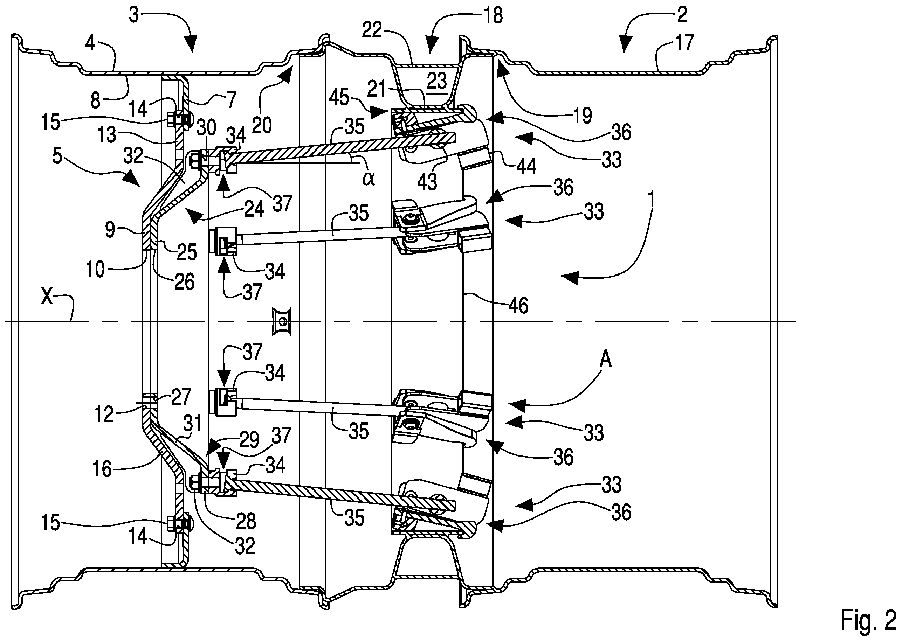

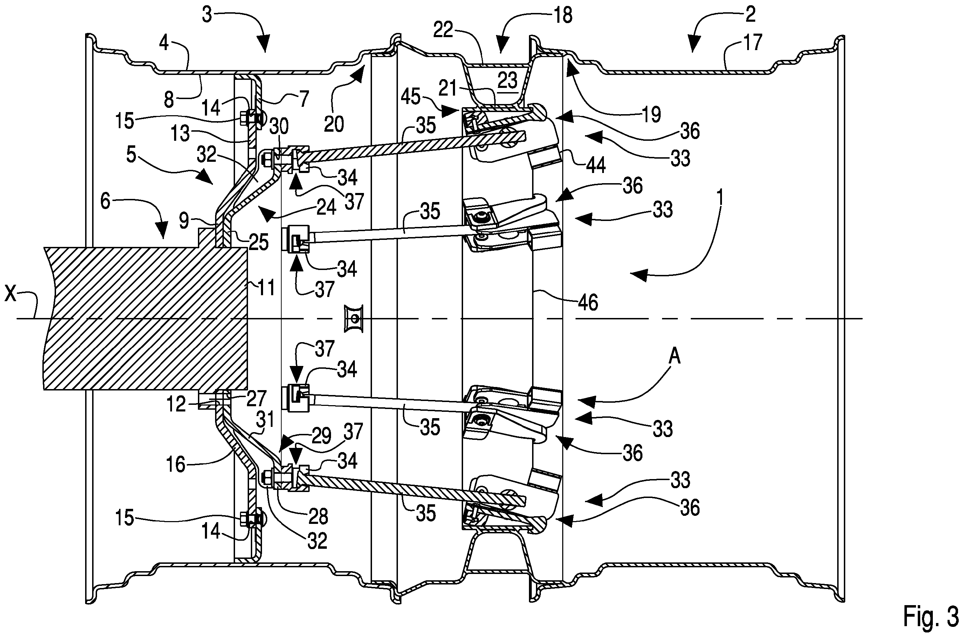

Again, the conical portion 31 has a conicity lesser than a conicity of the shaped region 16 of the disc 5 (Figures 2 and 3).

In the present description, by conicity is meant the dimensionless quantity that expresses the ratio of the difference of the diameters of two sections of a cone to the axial distance existing between them.

The fastening element 24 further comprises a plurality of radially extending strengthening ribs 32.

The strengthening ribs 32 project outward of the fastening element 24, i.e. from the side opposite the concavity defined by the conical portion 31.

In particular, the strengthening ribs 32 are arranged in pairs, one of the second fastening holes 30 being interposed between each pair of strengthening ribs 32.

The fastening system 1 further comprises a plurality of tensioning devices 33, in particular of the quick coupling type, which act, as best described herein below, between the auxiliary wheel 2 and the main wheel 3 in order to hold the auxiliary wheel 2 pressed against the main wheel 3.

Each tensioning device 33 comprises an anchoring element 34, a tension rod element, or connection rod 35, and a tensioning element 36.

The anchoring elements 34, or first end elements of the tensioning device 33 are, for example, six in number and are fixed equally spaced from one another by means of removable connecting means, not shown, for example bolts, to a respective second fixing hole 30.

Each anchoring element 34 is provided with a radial recess 37.

Each of said tension rod elements 35 comprises a head 38, or tang, which can be detachably radially inserted into a radial recess 37 of a respective anchoring element 34.

Again, each tension rod element 35 comprises a threaded end portion 39 opposite the respective head 38.

Each of said tensioning elements 36, or second end elements of the tensioning devices 33, comprises a hook element 40, a lever element 41, which is pivotally connected through a pin 42 to the respective hook element 40 and an internally threaded bush 43, which is pivotally connected, by means of a further pin, not shown, to a respective lever element 41.

Again, each of said tensioning elements 36 comprises a drive element 44, which can be engaged by a suitably shaped socket wrench, not shown.

In use, in order to adjust the tensioning of each tensioning device 33, it is sufficient to screw/unscrew the threaded portion 39 of a tension rod element 35 to/from the respective bush 43, thereby changing the distance between the respective anchoring element 34 and the respective tensioning element 36.

Again, in use, in order to drive each tensioning device 33 between a respective blocking position A, wherein the tensioning device 33 is tensioned to fasten the auxiliary wheel 2 to the main wheel 3 and a release position, not shown, wherein the tensioning device 33 is not tensioned to remove the auxiliary wheel 2 from the main wheel 3, it is sufficient to insert the socket wrench into the respective drive element 44 and rotate the corresponding lever element 41.

In particular, each tensioning device 33 is positioned in the respective blocking position A by rotating the respective lever element 41 clockwise and, vice versa, each tensioning device 33 is positioned in the respective release position by rotating the respective lever element 41 counter-clockwise.

The fastening system 1 further comprises a further fastening element 45, which is internally supported by the annular spacer 18 and intended to detachably engage, by means of an edge portion 46 thereof, the second end elements 36 of the tensioning devices 33, in particular the hook elements 40.

In particular, the further fastening element 45 is shaped as a cylindrical ring and is fastened, for example by means of welding, to the circumferential recess 21 of the annular spacer 18.

Again, the further fastening element 45 and the second fastening portion 28 are sized such that, in the blocking position A of the tensioning devices 33, the tension rod elements 35 are inclined relative to the rotation axis X of the main wheel 3, of an angle α lesser than 20°, in particular lesser than 15°.

In use, in order to fasten an auxiliary wheel 2 to a respective main wheel 3 by means of the fastening system 1 according the invention it is sufficient to:
- fasten, by means of removable connecting means, the anchoring elements 34 to respective second fastening holes 30 of the fastening element 24;
- move the auxiliary wheel 3 close to the main wheel 2 until the annular spacer 18 is abutted against the further shoulder 20 of the rim 4;
- insert the heads 38 of the tension rod elements 35 into the respective radial recesses 37 of the anchoring elements 34;

- hook the hook elements 40 to the edge portion 46 of the further fastening element 45;
- rotate the lever elements 41 clockwise by means of the socket wrench, such as to position the tensioning devices 33 in the blocking position A.

In order to unfasten the auxiliary wheel 2 from the main wheel 3, the sequence should be carried out in the reverse order.

It should be noted that the anchoring elements 34 can be left mounted into the respective second fastening holes 30 in order to speed up fastening operations.

It should be noted that the fastening system 1 allows, by means of the fastening element 24, to discharge the forces generated by the auxiliary wheel 2 also to the hub 6 of the vehicle and no longer to the disc 5 of the main wheel 3.

It is understood how this allows protecting the main wheels 3 of the vehicle to which the auxiliary wheels 2 are fastened.

Again, it should be noted that the particular size of the further fastening element 45 and second fastening portion 28, which allows holding the tension rod elements 35 inclined relative to the rotation axis X of the main wheel 3 of an angle α lesser than 20°, in particular lesser than 15°, as well as a small axial distance between the second fastening portion 28 of the fastening element 24 and the edge portion 46 of the further fastening element 45 contribute to reduce the stress transmitted from the auxiliary wheel 2 to the main wheel 3.

## Claims

1. A fastening system for fastening an auxiliary wheel (2) to a main wheel (3) of a vehicle, in particular an agricultural vehicle, wherein:
- said main wheel (3) comprises a rim (4) on which a tire can be mounted, and a disc (5) which is supported by said rim (4), through said disc (5) said main wheel (3) can be detachably fixed to a hub (6) of said vehicle; and
- said auxiliary wheel (2) comprises a further rim (17) on which a further tire can be mounted;
said fastening system (1) comprising:
- an annular spacer (18) interposed between said rim (4) and said further rim (17); and
- a plurality of tensioning devices (33) acting between said auxiliary wheel (2) and said main wheel (3) for holding said auxiliary wheel (2) pressed against said main wheel (3);
***characterised in that***
a fastening element (24) is provided comprising a first fastening portion (25), which can be detachably fixed to said hub (6), and a second fastening portion (28), which is axially spaced from said first fastening portion (25),
wherein each of said tensioning devices (33) comprises a first end element (34) which can be detachably fastened to said second fastening portion (28) and a second end element (36) which can be detachably fastened to said annular spacer (18).

2. A system according to claim 1, wherein said first fastening portion (25) is shaped as a circular crown and extends in a first plane substantially perpendicular to a rotation axis (X) of said main wheel (3).

3. A system according to claim 1, or 2, wherein said first fastening portion (25) comprises a plurality of first fastening holes (27) which are arranged angularly equally spaced from one another and that can be engaged by removable connecting means for fixing said fastening element (24) to said hub (6).

4. A system according to claim 3, wherein said first fastening holes (27) are coaxial to respective fastening holes (12) provided in said disc (5), said first fastening holes (27) and said fastening holes (12) can be engaged by removable connecting means which is in common between them, for fixing said fastening element (24) to said hub (6) through said disc (5).

5. A system according to one of the preceding claims, wherein said fastening element (24) comprises a first central opening (26) defined by said first fastening portion (25) and arranged for receiving a portion (11) of said hub (6).

6. A system according to claim 5, wherein said first central opening (26) has a diameter (D2) substantially equal to a diameter (D1) of a central opening (10) provided in said disc (5) and arranged for receiving said portion (11) of said hub (6).

7. A system according to one of the preceding claims, wherein said second fastening portion (28) is shaped as a circular crown and extends in a second plane substantially perpendicular to a rotation axis (X) of said main wheel (3).

8. A system according to one of the preceding claims, wherein said second fastening portion (28) comprises a plurality of second fastening holes (30) which are arranged angularly equally spaced from one another and can be detachably engaged by a respective first end element (34).

9. A system according to one of claims 6 to 8, wherein said fastening element (24) comprises a second central opening (29) defined by said second fastening portion (28), said second central opening (29) having a diameter (D3) which is greater than said diameter (D2) of said first central opening (26).

10. A system according to claim 9, wherein said first central opening (26) and said second central opening (29) are coaxial.

11. A system according to one of the preceding claims, wherein said second fastening portion (28) has a maximum diameter (D_{MAX}) smaller than a maximum diameter (D_{M}) of said disc (5).

12. A system according to one of the preceding claims, wherein said fastening element (24) comprises a shaped portion (31) for connecting said first fastening portion (25) to said second fastening portion (28).

13. A system according to claim 12, wherein said shaped portion comprises a conical portion (31) having a diameter which increases from said first fastening portion (25) to said second fastening portion (28).

14. A system according to one of the preceding claims, wherein said fastening element (24) comprises a plurality of radial strengthening ribs (32) projecting outwardly from said fastening element (24).

15. A system according to claim 14, wherein said strengthening ribs (32) are arranged in pairs, one of said second fastening holes (30) being interposed between each pair of strengthening ribs (32).

16. A system according to one of the preceding claims, wherein said tensioning devices (33) comprise quick coupling tensioning devices.

17. A system according to one of the preceding claims, wherein said annular spacer (18) is fixed to said further rim (17) and can be detachably coupled to said rim (4).

18. A system according to one of the preceding claims, wherein said fastening system (1) comprises a further fastening element (45) which is internally supported by said annular spacer (18) and intended to be detachably engaged with one or more of said second end elements (36).

19. A system according to claim 18, wherein each of said tensioning devices (33) comprises a tension rod element (35) which is interposed and acts between said first end element (34) and said second end element (36), wherein said further fastening element (45) and said second fastening portion (28) are sized such that, in a blocking position (A) of said tensioning devices (33) wherein they hold said auxiliary wheel (2) pressed against said main wheel (3), said tension rod element (35) is inclined, with respect to a rotation axis (X) of said main wheel (3), of an angle (α) lesser than 20°, in particular lesser than 15°.

20. A system according to claim 18, or 19, wherein said annular spacer (19) comprises a circumferential recess (21) projecting towards a rotation axis (X) of said main wheel (3), said further fastening element (45) being fixed to said circumferential recess (21).

## Patentansprüche

1. Befestigungssystem zum Befestigen eines Hilfsrads (2) an einem Hauptrad (3) eines Fahrzeugs, insbesondere eines landwirtschaftlichen Fahrzeugs, wobei:
- das Hauptrad (3) eine Felge (4), auf der ein Reifen montiert werden kann, und eine Scheibe (5) aufweist, die von der Felge (4) getragen wird, wobei durch die Scheibe (5) das Hauptrad (3) lösbar an einer Nabe (6) des Fahrzeugs befestigt werden kann, und
- das Hilfsrad (2) eine weitere Felge (17) aufweist, auf der ein weiterer Reifen montiert werden kann,
wobei das Befestigungssystem (1) aufweist:
- einen ringförmigen Abstandshalter (18), der zwischen der Felge (4) und der weiteren Felge (17) angeordnet ist, und
- eine Vielzahl an Spannvorrichtungen (33), die zwischen dem Hilfsrad (2) und dem Hauptrad (3) wirken, um das Hilfsrad (2) gegen das Hauptrad (3) gedrückt zu halten,
**dadurch gekennzeichnet, dass**
ein Befestigungselement (24) vorgesehen ist, das einen ersten Befestigungsabschnitt (25), der lösbar an der Nabe (6) befestigt werden kann, und einem zweiten Befestigungsabschnitt (28) aufweist, der axial von dem ersten Befestigungsabschnitt (25) beabstandet ist,
wobei jede der Spannvorrichtungen (33) ein erstes Endelement (34), das lösbar an dem zweiten Befestigungsabschnitt (28) befestigt werden kann, und ein zweites Endelement (36) aufweist, das lösbar an dem ringförmigen Abstandshalter (18) befestigt werden kann.

2. System nach Anspruch 1, wobei der erste Befestigungsabschnitt (25) als eine kreisförmige Krone geformt ist und sich in einer ersten Ebene im Wesentlichen senkrecht zu einer Drehachse (X) des Hauptrades (3) erstreckt.

3. System nach Anspruch 1 oder 2, wobei der erste Befestigungsabschnitt (25) eine Vielzahl an ersten Befestigungslöchern (27) aufweist, die im Winkel gleichmäßig voneinander beabstandet angeordnet sind und die mit entfernbaren Verbindungsmitteln in Eingriff gebracht werden können, um das Befestigungselement (24) an der Nabe (6) zu befestigen.

4. System nach Anspruch 3, wobei die ersten Befestigungslöcher (27) koaxial zu den jeweiligen Befestigungslöchern (12) sind, die in der Scheibe (5) vorgesehen sind, wobei die ersten Befestigungslöcher (27) und die Befestigungslöcher (12) in Eingriff durch ein entfernbares Verbindungsmittel gebracht werden können, das zwischen ihnen gemeinsam ist, um das Befestigungselement (24) an der Nabe (6) durch die Scheibe (5) zu befestigen.

5. System nach einem der vorhergehenden Ansprüche, wobei das Befestigungselement (24) eine erste zentrale Öffnung (26) aufweist, die durch den ersten Befestigungsabschnitt (25) bestimmt ist und die zur Aufnahme eines Abschnitts (11) der Nabe (6) angeordnet ist.

6. System nach Anspruch 5, wobei die erste zentrale Öffnung (26) einen Durchmesser (D2) aufweist, der im Wesentlichen gleich einem Durchmesser (D1) einer zentralen Öffnung (10) ist, die in der Scheibe (5) vorgesehen ist und die zur Aufnahme des Abschnitts (11) der Nabe (6) angeordnet ist.

7. System nach einem der vorhergehenden Ansprüche, wobei der zweite Befestigungsabschnitt (28) als eine kreisförmige Krone geformt ist und sich in einer zweiten Ebene im Wesentlichen senkrecht zu einer Drehachse (X) des Hauptrads (3) erstreckt.

8. System nach einem der vorhergehenden Ansprüche, wobei der zweite Befestigungsabschnitt (28) eine Vielzahl an zweiten Befestigungslöchern (30) aufweist, die im Winkel gleichmäßig voneinander beabstandet angeordnet sind und die mit einem entsprechenden ersten Endelement (34) lösbar in Eingriff gebracht werden können.

9. System nach einem der Ansprüche 6 bis 8, wobei das Befestigungselement (24) eine zweite zentrale Öffnung (29) aufweist, die durch den zweiten Befestigungsabschnitt (28) bestimmt ist, wobei die zweite zentrale Öffnung (29) einen Durchmesser (D3) aufweist, der größer als der Durchmesser (D2) der ersten zentralen Öffnung (26) ist.

10. System nach Anspruch 9, wobei die erste zentrale Öffnung (26) und die zweite zentrale Öffnung (29) koaxial sind.

11. System nach einem der vorhergehenden Ansprüche, wobei der zweite Befestigungsabschnitt (28) einen maximalen Durchmesser (D_{MAX}) aufweist, der kleiner als ein maximaler Durchmesser (D_{M}) der Scheibe (5) ist.

12. System nach einem der vorhergehenden Ansprüche, wobei das Befestigungselement (24) einen geformten Abschnitt (31) aufweist, um den ersten Befestigungsabschnitt (25) mit dem zweiten Befestigungsabschnitt (28) zu verbinden.

13. System nach Anspruch 12, wobei der geformte Abschnitt einen konischen Abschnitt (31) mit einem Durchmesser aufweist, der von dem ersten Befestigungsabschnitt (25) zu dem zweiten Befestigungsabschnitt (28) zunimmt.

14. System nach einem der vorhergehenden Ansprüche, wobei das Befestigungselement (24) eine Vielzahl an radialen Verstärkungsrippen (32) aufweist, die von dem Befestigungselement (24) nach außen vorstehen.

15. System nach Anspruch 14, wobei die Verstärkungsrippen (32) paarweise angeordnet sind, wobei eines der zweiten Befestigungslöcher (30) zwischen jedem Paar der Verstärkungsrippen (32) angeordnet ist.

16. System nach einem der vorhergehenden Ansprüche, wobei die Spannvorrichtungen (33) Schnellkupplungsspannvorrichtungen aufweisen.

17. System nach einem der vorhergehenden Ansprüche, wobei der ringförmige Abstandshalter (18) an der weiteren Felge (17) befestigt ist und lösbar mit der Felge (4) verbunden werden kann.

18. System nach einem der vorhergehenden Ansprüche, wobei das Befestigungssystem (1) ein weiteres Befestigungselement (45) aufweist, das innen von dem ringförmigen Abstandshalter (18) getragen wird und das mit einem oder mehreren der zweiten Endelemente (36) lösbar in Eingriff gebracht werden soll.

19. System nach Anspruch 18, wobei jede der Spannvorrichtungen (33) ein Zugstangenelement (35) aufweist, das zwischen dem ersten Endelement (34) und dem zweiten Endelement (36) angeordnet ist und wirkt, wobei das weitere Befestigungselement (45) und der zweite Befestigungsabschnitt (28) auf eine solche Weise bemessen sind, dass sie in einer Blockierposition (A) der Spannvorrichtungen (33), in denen sie das Hilfsrad (2) halten, gegen das Hauptrad (3) gedrückt werden, wobei das Zugstangenelement (35) bezüglich einer Drehachse (X) des Hauptrades (3) um einen Winkel (α) von weniger als 20°, insbesondere weniger als 15° geneigt ist.

20. System nach Anspruch 18 oder 19, wobei der ringförmige Abstandshalter (19) eine umlaufende Ausnehmung (21) aufweist, die in Richtung auf eine Drehachse (X) des Hauptrades (3) vorsteht, wobei das weitere Befestigungselement (45) an der umlaufenden Ausnehmung (21) befestigt ist.

## Revendications

1. Système d'attache pour attacher une roue auxiliaire (2) à une roue principale (3) d'un véhicule, en particulier un véhicule agricole, dans lequel:
- ladite roue principale (3) comprend une jante (4) sur laquelle un pneumatique peut être monté, et un disque (5) qui est supporté par ladite jante (4), à travers ledit disque (5), ladite roue principale (3) peut être fixée de manière détachable à un moyeu (6) dudit véhicule; et
- ladite roue auxiliaire (2) comprend une jante supplémentaire (17) sur laquelle un pneumatique supplémentaire peut être monté;
ledit système d'attache (1) comprenant:
- un espaceur annulaire (18) interposé entre ladite jante (4) et ladite jante supplémentaire (17); et
- une pluralité de dispositifs tendeurs (33) agissant entre ladite roue auxiliaire (2) et ladite roue principale (3) pour maintenir ladite roue auxiliaire (2) pressée contre ladite roue principale (3);
**caractérisé en ce que**
un élément d'attache (24) est prévu comprenant une première partie d'attache (25), qui peut être fixée de manière détachable audit moyeu (6), et une seconde partie d'attache (28), qui est axialement espacée de ladite première partie d'attache (25),
dans lequel chacun desdits dispositifs tendeurs (33) comprend un premier élément d'extrémité (34) qui peut être attaché de manière détachable à ladite seconde partie d'attache (28) et un second élément d'extrémité (36) qui peut être attaché de manière détachable audit espaceur annulaire (18).

2. Système selon la revendication 1, dans lequel ladite première partie d'attache (25) est formée comme une couronne circulaire et s'étend dans un premier plan sensiblement perpendiculaire à un axe de rotation (X) de ladite roue principale (3).

3. Système selon la revendication 1 ou 2, dans lequel ladite première partie d'attache (25) comprend une pluralité de premiers trous d'attache (27) qui sont agencées de manière angulairement équidistante les uns des autres et qui peuvent entrer en prise avec des moyens de liaison amovibles pour fixer ledit élément d'attache (24) audit moyeu (6).

4. Système selon la revendication 3, dans lequel lesdits premiers trous d'attache (27) sont coaxiaux à des trous d'attache (12) respectifs prévus dans ledit disque (5), lesdits premiers trous d'attache (27) et lesdits trous d'attache (12) peuvent entrer en prise avec des moyens de liaison amovibles qui sont communs entre eux, pour fixer ledit élément d'attache (24) audit moyeu (6) à travers ledit disque (5).

5. Système selon l'une des revendications précédentes, dans lequel ledit élément d'attache (24) comprend une première ouverture centrale (26) définie par ladite première partie d'attache (25) et agencée pour recevoir une partie (11) dudit moyeu (6).

6. Système selon la revendication 5, dans lequel ladite première ouverture centrale (26) a un diamètre (D2) sensiblement égal à un diamètre (D1) d'une ouverture centrale (10) prévue dans ledit disque (5) et agencée pour recevoir ladite partie (11) dudit moyeu (6).

7. Système selon l'une des revendications précédentes, dans lequel ladite seconde partie d'attache (28) est formée comme une couronne circulaire et s'étend dans un second plan sensiblement perpendiculaire à un axe de rotation (X) de ladite roue principale (3).

8. Système selon l'une des revendications précédentes, dans lequel ladite seconde partie d'attache (28) comprend une pluralité de seconds trous d'attache (30) qui sont agencées de manière angulairement équidistante les uns des autres et peuvent venir en prise de manière détachable avec un premier élément d'extrémité (34) respectif.

9. Système selon l'une des revendications 6 à 8, dans lequel ledit élément d'attache (24) comprend une seconde ouverture centrale (29) définie par ladite seconde partie d'attache (28), ladite seconde ouverture centrale (29) ayant un diamètre (D3) qui est supérieur audit diamètre (D2) de ladite première ouverture centrale (26) .

10. Système selon la revendication 9, dans lequel ladite première ouverture centrale (26) et ladite seconde ouverture centrale (29) sont coaxiales.

11. Système selon l'une des revendications précédentes, dans lequel ladite seconde partie d'attache (28) a un diamètre maximal (D_{MAX}) inférieur à un diamètre maximal (D_{M}) dudit disque (5).

12. Système selon l'une des revendications précédentes, dans lequel ledit élément d'attache (24) comprend une partie conformée (31) pour relier ladite première partie d'attache (25) à ladite seconde partie d'attache (28).

13. Système selon la revendication 12, dans lequel ladite partie conformée comprend une partie conique (31) ayant un diamètre qui augmente de ladite première partie d'attache (25) à ladite seconde partie d'attache (28) .

14. Système selon l'une des revendications précédentes, dans lequel ledit élément d'attache (24) comprend une pluralité de nervures de renfort radiales (32) faisant saillie vers l'extérieur depuis ledit élément d'attache (24).

15. Système selon la revendication 14, dans lequel lesdites nervures de renfort (32) sont agencées par paires, l'un desdits seconds trous d'attache (30) étant interposé entre chaque paire de nervures de renfort (32).

16. Système selon l'une des revendications précédentes, dans lequel lesdits dispositifs tendeurs (33) comprennent des dispositifs tendeurs à couplage rapide.

17. Système selon l'une des revendications précédentes, dans lequel ledit espaceur annulaire (18) est fixé à ladite jante supplémentaire (17) et peut être couplé de manière détachable à ladite jante (4).

18. Système selon l'une des revendications précédentes, dans lequel ledit système d'attache (1) comprend un élément d'attache supplémentaire (45) qui est supporté intérieurement par ledit espaceur annulaire (18) et destiné à venir en prise de manière détachable avec un ou plusieurs desdits seconds éléments d'extrémité (36).

19. Système selon la revendication 18, dans lequel chacun desdits dispositifs tendeurs (33) comprend un élément de tige de tension (35) qui est interposé et agit entre ledit premier élément d'extrémité (34) et ledit second élément d'extrémité (36), dans lequel ledit élément d'attache supplémentaire (45) et ladite seconde partie d'attache (28) sont dimensionnés de telle sorte que, dans une position de blocage (A) desdits dispositifs tendeurs (33) dans laquelle ils maintiennent ladite roue auxiliaire (2) pressée contre ladite roue principale (3), ledit élément de tige de tension (35) est incliné, par rapport à un axe de rotation (X) de ladite roue principale (3), d'un angle (a) inférieur à 20°, en particulier inférieur à 15°.

20. Système selon la revendication 18 ou 19, dans lequel ledit espaceur annulaire (19) comprend un évidement circonférentiel (21) faisant saillie vers un axe de rotation (X) de ladite roue principale (3), ledit élément d'attache supplémentaire (45) étant fixé audit évidement circonférentiel (21).
